Europäisches Patentamt

European Patent Office

Office européen des brevets

(11) Veröffentlichungsnummer: **0 108 827**
A1

# EUROPÄISCHE PATENTANMELDUNG

(21) Anmeldenummer: 82110544.2

(22) Anmeldetag: 16.11.82

(51) Int. Cl.³: **C 04 B 19/04, C 09 D 1/02**

(43) Veröffentlichungstag der Anmeldung: 23.05.84
Patentblatt 84/21

(71) Anmelder: Schwiete, Rolf, Dr., Mainzer Strasse 35,
D-6084 Gernsheim/Rhein (DE)

(72) Erfinder: Schwiete, Rolf, Dr., Mainzer Strasse 35,
D-6084 Gernsheim/Rhein (DE)

(84) Benannte Vertragsstaaten: AT BE CH DE FR GB IT LI LU NL SE

(74) Vertreter: Ratzel, Gerhard, Dr., Seckenheimer Strasse 36a, D-6800 Mannheim 1 (DE)

(54) Verfahren zur Herstellung streichfähiger und/oder spachtelfähiger silikatischer thixotroper Massen.

(57) Die Erfindung betrifft ein Verfahren zur Herstellung streichfähiger und/oder spachtelfähiger silikatischer thixotroper Massen aus einem Gemisch aus Wasser, Pigmenten, Netz-und/oder Dispergiermitteln, amorphen und/oder kristallinen anorganischen Silicium-Verbindungen, die Silicium-Verbindungen mit Ketten-Struktur, Schichten-Struktur oder dreidimensionalen Silikat-Gerüsten enthalten, und Alkali-Silikat-Lösung. Des weiteren können Netzmittel und neutrale und/oder saure Salze mehrwertiger den Mischubgeb zugesetzt werden.

EP 0 108 827 A1

0108827

## Verfahren zur Herstellung streichfähiger und/oder spachtelfähiger silikatischer thixotroper Massen

Die Erfindung betrifft ein Verfahren zur Herstellung streichfähiger und/oder spachtelfähiger silikatischer, thixotroper Massen.

Aus Alkalisilikatlösungen, Pigmenten und geeigneten Farbpigmenten können bekanntermaßen silikatische Massen hergestellt werden. Solche silikatischen Massen können bei entsprechender Auswahl der Pigmente, der Farbpigmente und der Alkalisilikatlösungen zur Herstellung von Anstrichfarben, silikatischen Kitten und fugenlosen Wandverkleidungen Verwendung finden.

Alkalisilikatlösungen finden unter Ausnutzung der kolloiden, schmutztragenden, adsorptiven und die Korrosion, vor allem von Aluminium, hindernden Eigenschaften zur Herstellung von Wasch- und Reinigungsmittel, von Kieselsolen und Kieselgelen, von Crack-Katalysatoren, für Klebezwecke, für Kitte, zur Wasserbehandlung, als Korrosionsinhibitor sowie als Farbbindemittel Verwendung.

Kaliwasserglas-Lösungen werden zur Herstellung von Mineralfarben als Bindemittel sowie als (im Gegensatz zu Natronwassergläsern) nicht zum Ausblühen neigende Anstrichmittel benutzt.

Die silikatischen Massen müssen für eine Verarbeitung insbesondere als streichfähige Masse, die Eigenschaft der Thixotropie aufweisen. Mit Thixotropie wird die Eigenschaft gelförmiger, gallertartiger Stoffe bezeichnet, bei Bewegung flüssig zu bleiben, im Ruhezustand aber zu erstarren. In den Gelen liegen unregelmäßige, von Lösungsmittel "durchtränkte", weitmaschige Gerüste aus kolloiden Bauteilchen vor, die an einzelnen Punkten durch VAN DER WAALS'sche oder andere schwache Kräfte miteinander verbunden sind.

Infolge der geringen Zahl von Verknüpfungsstellen genügt bisweilen ein bloßes Schütteln des Gels, um diese lokale Bindungen zu lösen und das Gel zu verflüssigen. Nach Aufhören der mechanischen Störung treten im Laufe längerer oder kürzerer Zeit die verknüpfenden Bindungen erneut auf, so daß das Gel wieder erstarrt (hydrophile, Kolloide, reversible Kolloide).

Die Eigenschaft der Thixotropie ist erforderlich, um z.B. beim Anstreichen ein Ablaufen der aufgebrachten Massen zu verhindern und ein Verfestigen zu bewirken.

Die GB-PS 1o 68 584 beschreibt eine Silikatfarben-Komposition, die zumindest ein wasserlösliches Alkalisilikat, zumindest einen Füllstoff und/oder ein Pigment und zumindest einen filmbildenden kolloidalen Binder, der in Silikatlösungen löslich ist, und der vorzugsweise aus Alkalipolyacrylat oder aus Polygalactomannan besteht, enthält. Dabei wird bei der Silikatfarben-Komposition gemäß GB-PS 1o 68 584 im wesentlichen zunächst von einer Natriumsilikatlösung als Grundlösung ausgegangen, zu der dann die anderen Inhaltsstoffe zugegeben werden.

Die DE-AS beschreibt ein Verfahren zur Herstellung streichfähiger silikatischer thixotroper Massen, das dadurch gekennzeichnet ist, daß man zu einer fertigen Mischung aus Wasser, Pigmenten, Netz- und/oder Dispergiermitteln und gegebenenfalls Montmorillonit und/oder Hydrophobiermitteln, Alkalisilikatlösung zugibt.

Die silikatischen Massen gemäß dem Stand der Technik sind im allgemeinen nicht über einen längeren Zeitraum haltbar. Sie flocken aus, verdicken, vergrießen und koagulieren und können dann nicht mehr in den gelförmigen Zustand gebracht und verarbeitet werden.

Die Haltbarkeit silikatischer Massen ist abhängig von den Eigenschaften der verwendeten Alkalisilikate, von der Art und dem chemischen Charalter der Pigmente und Farbpigmente und auch von deren Kornverteilung. Die Haltbarkeit ist zeitlich begrenzt und liegt meistens bei 12 bis 24 Stunden. Zwar sind silikatische Massen gemäß DE-AS 2o 11 9o1 über Tage hinaus haltbar und weisen interessante thixotrope und rheologische Eigenschaften auf.

Doch weisen sie wie auch alle anderen silikatischen Anstrichmassen die Nachteile auf, daß die Eigenschaften nur über einen begrenzten Temperaturbereich in der gewünschten Weise erhalten bleiben. So sind die thixotropen Eigenschaften, die gute Streichfähigkeit und das gute Verlaufen sowie gleichmäßige Verbinden mit dem Untergrund nur in einem begrenzten Temperaturbereich gegeben.

Bei Wasserglas selbst führt z.B. Frosteinwirkung zur Entmischung, jedoch werden die Lösungen beim Wiedererwärmen unter Durchmischung wieder homogen.

Demgegenüber liegt vorliegender Erfindung die Aufgabe zugrunde, ein Verfahren zur Herstellung streichfähiger und/oder spachtelfähiger silikatischer thixotroper Massen zu liefern, die ihre Streich- und/oder Spachtelfähigkeit, das gleichmäßige Verbinden mit dem Untergrund, die Stabilität bei Verarbeitung bei ungewöhnlichen Temperaturen, die Homogenität über einen weiten Temperaturbereich behalten.

Diese Aufgabe wird erfindungsgemäß bei einem Verfahren der eingangs genannten Gattung dadurch gelöst, daß zu einem Gemisch aus Wasser, Pigmenten, Netz- und/oder Dispermiermitteln, amorphen und/oder kristallinen anorganischen Silicium-Verbindungen, die Silicium-Verbindungen mit Ketten-Struktur, Doppelketten-Struktur, Schichten-Struktur oder dreidimensionalen Silikat-Gerüst enthalten, und gegebenenfalls Montmorillonit und/oder Hydrophobiermitteln, Alkali-Silikat-Lösung zugegeben wird.

Besondere Ausführungsformen der vorliegenden Erfindung sind dadurch gekennzeichnet, daß als anorganische Silicium-Verbindung mit dreidimensionalem Silikat-Gerüst (Tectosilikate) Feldspate, Zeolithe oder Ultramarin, als anorganische Silicium-Verbindung mit Schichten-Struktur, Aluminiumhydrosilikate, insbesondere Glimmer, Attapulgit, Sepiolith oder Halloysit, als anorganische Silicium-Verbindung mit Doppelketten-Struktur, Sillimanit, Mullit, Tremolit oder Hornblendenasbest, als anorganische Silicium-Verbindung mit Ketten-Struktur (Inosilikate) Kalciummetasilikat, Wallastonit, Enstatit oder Rhodonit, als amorphe anorganische Silicium-Verbindungen feinteiliges gefälltes Siliciumdioxid, Aerosil, Kieselsäuresole, Kieselsäuregel, Kieselglas oder Kieselgur, als kristalline anorganische Silicium-Verbindung $\alpha$-Quarz, $\beta$-Quarz, Coesit, $\alpha$-Cristobalit, $\beta$-Cristobalit, $\alpha$-Tridymit, $\beta$-Tridymit, oder Stischowit, und als amorphe und kristalline anorganische Silicium-Verbindung Achat, Chalcedon oder Flint eingesetzt wird.

Weitere besondere Ausführungsformen sind dadurch
gekennzeichnet,

daß man als Netzmittel neutrale und/oder saure Salze
mehrwertiger anorganischer und/oder organischen Säuren in Mengen von 0 bis 2 Gew.-% bezog en auf das Gewicht
der Gesamtmasse einsetzt,

daß man als Netzmittel Ammoniumsalze einsetzt,

daß man als Dispergiermittel Ammoniak, Ammoniumsalze
und/oder sekundäre Amine in Mengen von 0 bis 4 Gew.-%
zugibt.

Es zeigte sich in überraschender Weise, daß die erfindungsgemäße Kombination von Substanzen bei Verwendung in
erfindungsgemäßer Weise sprunghaft verbesserte Eigenschaften bezüglich des erweiterten Temperaturbereiches
und der Stabilität, Anwendbarkeit, Streich- und/oder
Spachtelfähigkeit, gleichmäßigen Verbindens mit dem
Untergrund, Thixotropie und Homogenität über einen weiten
Temperaturbereich und für längere Zeit aufweisen.

Die Erfindung wird im folgenden anhand von Beispielen
näher erläutert:

Beispiel 1:

Man löst in
32,7 Gewichtsteilen Wasser
0,2 Gewichtsteile   Monoammoniumphosphat und
0,1 Gewichtsteile   Montmorillonit.

Dann werden die folgenden Bestandteile unter Einrühren
mit einem Dissolver zugegeben:
15,0 Gewichtsteile Kreide
10,0 Gewichtsteile Titandioxid Rutil
5,0 Gewichtsteile Zinkoxid
10,0 Gewichtsteile Talkum
10,0 Gewichtsteile Quarzmehl fein

0108827

- 6 -

17,0 Gewichtsteile Quarzmehl grob.

Zu der so erhaltenen, lagerstabilen Masse werden
38,0 Gewichtsteile Kali-Wasserglas , 32° Be mit einem
Molverhältnis

$$K_2O : SiO_2 = 1 : 3,2$$

zugeführt.

Diese silikatische Masse zeichnet sich durch gute Deckkraft, Stabilität, Streich- und Spachtelfähigkeit und
ausgeprägte Thixotropie aus. Sie ist sehr leicht verstreichbar und läuft an Senkrechten auch bei dickem
Auftrag nicht ab.

<u>Beispiel 2:</u>

Man löst in
31,0 Gewichtsteilen Wasser
0,2 Gewichtsteile    Monoethanolamin,
0,1 Gewichtsteil     Monoammoniumphosphat und
0,1 Gewichtsteil     Montmorillonit.

In diese Lösung werden die folgenden Bestandteile eingerührt:
14,8 Gewichtsteile Kreide,
2,1 Gewichtsteile Zinkoxid
14,8 Gewichtsteile Ultramarinblau
9,8 Gewichtsteile Mica (gemahlener Glimmer)
0,5 Gewichtsteile gefällte Kieselsäure
26,6 Gewichtsteile Cristoballit-Mehl fein.

Die so erhaltene Masse wird 12 Stunden in einer Kugelmühle gemahlen.

Zu 100 Gewichtsteilen der gemahlenen Masse werden

39 Gewichtsteile Kali-Wasserglas, 29° Be mit einem
Molverhältnis

$$K_2O : SiO_2 = 1 : 3,94$$

zugeführt.

Die so erhaltene silikatische Masse ist stark
thixotrop, ist sehr leicht verstreichbar, homogen,
verbindet sich gleichmäßig mit dem Untergrund und
bildet auch bei stärkerem Auftrag keine Risse.

0108827

— 1 —

<u>P a t e n t a n s p r ü c h e</u>

1. Verfahren zur Herstellung streichfähiger und/oder spachtelfähiger silikatischer thixotroper Massen, dadurch gekennzeichnet, daß zu einem Gemisch aus Wasser, Pigmenten, Netz- und/oder Dispergiermitteln, amorphen und/oder kristallinen anorganischen Silicium-Verbindungen, die Silicium-Verbindungen mit Ketten-Struktur, Doppelketten-Struktur, Schichten-Struktur oder dreidimensionalen Silikat-Gerüsten enthalten, und gegebenenfalls Montmorillonit und/oder Hydrophobiermitteln, Alkali-Silikat-Lösungen zugegeben wird.

2. Verfahren nach Anspruch 1, dadurch gekennzeichnet, daß als anorganische Silicium-Verbindung mit dreidimensionalem Silikat-Gerüst (Textosilikate) Feldspate, Zeolithe oder Ultramarin eingesetzt wird.

3. Verfahren nach Ansprüchen 1 bis 2, dadurch gekennzeichnet, daß als anorganische Silicium-Verbindung mit Schichten-Struktur Aluminiumhydrosilikate, insbesondere Glimmer, Attapulgit, Sepiolith oder Halloysit eingesetzt wird.

4. Verfahren nach Ansprüchen 1 bis 3, dadurch gekennzeichnet, daß als anorganische Silicium-Verbindung mit Doppelketten-Struktur, Sillimanit, Mullit, Tremolit oder Hornblendenasbest eingesetzt wird.

5. Verfahren nach Ansprüchen 1 bis 4,
dadurch gekennzeichnet,
daß als anorganische Silicium-Verbindung mit
Kettenstruktur (Inosilicate) Kalciummetasilikat,
Wollastonit, Enstatit oder Rhodanit eingesetzt wird.

6. Verfahren nach Ansprüchen 1 bis 5,
dadurch gekennzeichnet,
daß als amorphe anorganische Siliciumverbindung
feinteiliges, gefälltes Siliciumdioxid, Aerosil,
Kieselsäuresole, Kieselsäuregel, Kieselglas oder
Kieselgur eingesetzt wird.

7. Verfahren nach Ansprüchen 1 bis 6,
dadurch gekennzeichnet,
daß als kristalline anorganische Silicium-Verbindung α-Quarz, β-Quarz, Coesit, α-Cristobalit,
β-Cristobalit, α-Tridymit, β-Tridymit oder Stischowit eingesetzt wird.

8. Verfahren nach Ansprüchen 1 bis 7,
dadurch gekennzeichnet,
daß als amorphe und kristalline anorganische Silicium-Verbindung Achat, Chalcedon, oder Flint eingesetzt wird.

9. Verfahren nach Ansprüchen 1 bis 8,
dadurch gekennzeichnet,
daß man als Netzmittel neutrale und/oder saure Salze
mehrwertiger anorganischer und/oder organischer Säuren in Mengen von 0 - 2 Gew.-% bezogen auf das Gewicht der Gesamtmasse einsetzt.

1o. Verfahren nach Ansprüchen 1 bis 9,
dadurch gekennzeichnet,
daß man als Netzmittel Ammoniumsalze einsetzt.

11. Verfahren nach Ansprüchen 1 bis 1o,
dadurch gekennzeichnet,
daß man als Dispergiermittel Ammoniak, Ammoniumsalze und/oder sekundäre Amine in Mengen von
O bis 4 Gew.-%, zugibt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | GB-A-1 499 804 (ANTHONY HARTFREE) <br> * Ansprüche 1,3,8 * | 1,3 | C 04 B 19/04 <br> C 09 D 1/02 |
| X | FR-A-2 294 840 (SAINT-GOBAIN INDUSTRIES) <br> * Ansprüche 1,2 * | 1,3 | |
| X | FR-A-2 417 482 (SOCIETE RHONE-POULENC INDUSTRIES) <br> * Ansprüche 1,4,6,7; Seite 3, Zeilen 4-6 * | 1,3,9 | |
| X | DE-A-2 334 434 (CIMA INTERNATIONAL DIPL.-KFM. W. HOCHMUTH) <br> * Ansprüche 1-3; Seite 1 * | 1-4 | |
| X | DE-A-1 282 215 (THE AIR PREHHEATER COMPANY) <br> * Anspruch * | 1,6,7 | |

**RECHERCHIERTE SACHGEBIETE (Int. Cl. 3)**

C 09 D
C 04 B

Der vorliegende Recherchenbericht wurde für alle Patentansprüche erstellt.

| Recherchenort | Abschlußdatum der Recherche | Prüfer |
|---|---|---|
| DEN HAAG | 09-02-1983 | STANGE R.L.H |